# EUROPEAN PATENT APPLICATION

(11) **EP 4 506 253 A1**
(43) Date of publication of application: **12.02.2025**
(21) Application number: 24191495.1
(22) Date of filing: 29.07.2024
(51) Int. Cl.: B64D 13/06

(54) **ULTRA-HIGH TEMPERATURE TURBO GENERATOR**

(30) Priority: 07.08.2023 US 202363518024 P; 15.02.2024 US 202418442639
(71) Applicant: Hamilton Sundstrand Corporation, Charlotte, NC 28217-4578 (US)
(72) Inventor: WATSON, Kirei O., Windsor, CT (US); BRUNO, Louis J., Ellington, CT (US); LIAO, Xiaohong, Andover, CT (US); PESS, Matthew L., West Hartford, CT (US); GOSSE, Kayla, Ellington, CT (US); ERNST, Jeff, Bellevue, NE (US); SPIERLING, Todd A., Rockford, IL (US)
(74) Representative: Dehns

(57) **Abstract**

A cooling system for an aircraft capable of travelling at hypersonic speeds includes an inlet (22) configured to receive a first medium and a thermodynamic device (24) fluidly connected to the inlet (22). The thermodynamic device (24) includes at least one turbine and a compressor operably coupled via a shaft. An outlet of the at least one turbine is directly fluidly connected to an inlet of the compressor. An electric generator (34) is operably coupled to the at least one turbine.

## Description

### CROSS-REFERENCE TO RELATED APPLICATIONS

This application claims the benefit of U.S. Provisional Application No. 63/518,024 filed August 7, 2023.

### BACKGROUND

Exemplary embodiments pertain to the art of thermal management of and, in particular, to thermal management of one or more loads of a vehicle.

A typical aircraft includes at least several nonintegrated pressurization systems configured to provide temperature control to various regions of the aircraft. For example, an aircraft environmental control system primarily provides heating and cooling for the aircraft cabin area. Since each system has a significant weight and power requirement, the overall efficiency of the aircraft is affected by these nonintegrated systems.

One or more of these pressurization systems may rely on an air supply to condition, i.e., to cool or heat another medium. However, in applications where the aircraft is travelling at supersonic or hypersonic speeds, the temperature of this air may be too high to effectively remove heat from another load.

### BRIEF DESCRIPTION

According to an embodiment, a cooling system for an aircraft capable of travelling at hypersonic speeds includes an inlet configured to receive a first medium and a thermodynamic device fluidly connected to the inlet. The thermodynamic device includes at least one turbine and a compressor operably coupled via a shaft. An outlet of the at least one turbine is directly fluidly connected to an inlet of the compressor. An electric generator is operably coupled to the at least one turbine.

In addition to one or more of the features described above, or as an alternative to any of the foregoing embodiments a heat exchanger is arranged upstream from the at least one turbine relative to a flow of the first medium.

In addition to one or more of the features described above, or as an alternative to any of the foregoing embodiments a heat exchanger is arranged upstream from the thermodynamic device relative to a flow of the first medium.

In addition to one or more of the features described above, or as an alternative to any of the foregoing embodiments the at least one turbine includes a first turbine and a second turbine arranged in series relative to a flow of medium.

In addition to one or more of the features described above, or as an alternative to any of the foregoing embodiments an inlet of the second turbine is directly fluidly connected to the outlet of the first turbine.

In addition to one or more of the features described above, or as an alternative to any of the foregoing embodiments the outlet of the first turbine is directly fluidly connected to the inlet of the compressor.

In addition to one or more of the features described above, or as an alternative to any of the foregoing embodiments the compressor and the second turbine are arranged in parallel relative to the outlet of the first turbine.

In addition to one or more of the features described above, or as an alternative to any of the foregoing embodiments a heat exchanger is arranged downstream from the at least one turbine relative to a flow of the first medium.

In addition to one or more of the features described above, or as an alternative to any of the foregoing embodiments the heat exchanger is arranged directly downstream from an outlet of the second turbine.

In addition to one or more of the features described above, or as an alternative to any of the foregoing embodiments a second medium is arranged in a heat transfer relationship with the first medium within the heat exchanger and the second medium is fuel.

In addition to one or more of the features described above, or as an alternative to any of the foregoing embodiments the electric generator is operably coupled to at least one electrical load of the aircraft.

In addition to one or more of the features described above, or as an alternative to any of the foregoing embodiments the at least one turbine is operable to extract a first energy from the first medium. The compressor is operable to use a second energy and the electric generator is operable to use a third energy. The first energy is generally equal to the second energy and the third energy when combined.

In addition to one or more of the features described above, or as an alternative to any of the foregoing embodiments the first medium at the inlet has a temperature of at least on 537.78 degrees Celsius (1000°F).

According to an embodiment, a method of cooling a medium includes providing a first medium having a temperature of at least 537.78 degrees Celsius (1000°F), extracting energy from the first medium a turbine to form an expanded first medium, compressing at least a portion of the expanded first medium via a compressor, and generating energy via an electric generator. The compressor is driven by energy extracted from the first medium within the turbine and the electric generator is driven by energy extracted from the first medium within the turbine.

In addition to one or more of the features described above, or as an alternative to any of the foregoing embodiments cooling the first medium prior to extracting energy from the first medium within the turbine.

In addition to one or more of the features described above, or as an alternative to any of the foregoing embodiments cooling the first medium after the extracting energy from the first medium within the turbine.

In addition to one or more of the features described above, or as an alternative to any of the foregoing embodiments extracting energy from another portion of the expanded first medium within another turbine. The energy extracted from the expanded first medium within the another turbine is used to drive the compressor and the electric generator.

In addition to one or more of the features described above, or as an alternative to any of the foregoing embodiments cooling the first medium after the extracting energy from the expanded first medium within the another turbine.

### BRIEF DESCRIPTION OF THE DRAWINGS

The following descriptions should not be considered limiting in any way. With reference to the accompanying drawings, like elements are numbered alike:
FIG. 1 is a schematic diagram of a thermodynamic device according to an embodiment; and
FIG. 2 is another schematic diagram of a thermodynamic device according to an embodiment.

### DETAILED DESCRIPTION

A detailed description of one or more embodiments of the disclosed apparatus and method are presented herein by way of exemplification and not limitation with reference to the Figures.

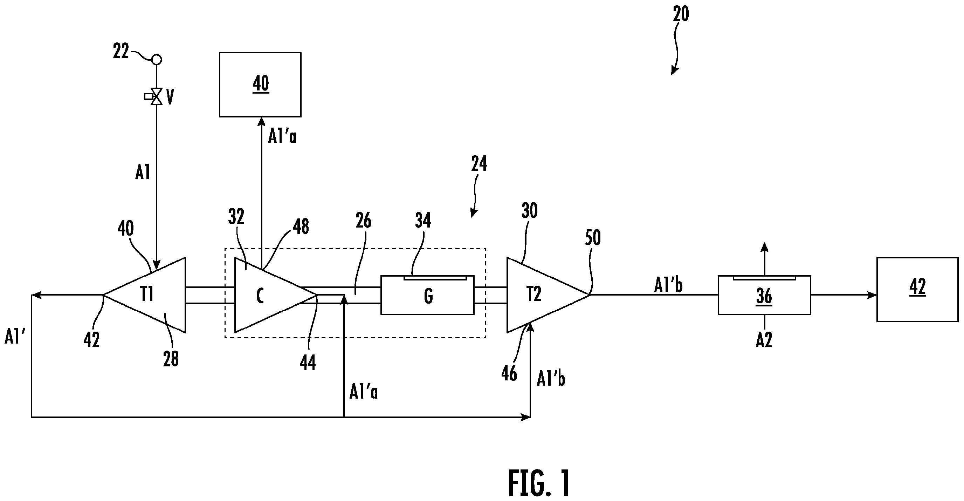

With reference now to the FIG. 1, a schematic diagram of a portion of a cooling system 20 of a vehicle is illustrated. The cooling system 20 may be an air cycle subsystem or part of an environmental control system and is configured to receive a medium A1 at an inlet 22. In an embodiment, the medium A1 at the inlet has a temperature of at least 537.78 degrees Celsius (1000°F), and in some embodiments, may be between about 537.78 degrees Celsius (1000°F) and about 1648.89 degrees Celsius (3000°F), such as about 1482.22 degrees Celsius (2700°F) for example. The medium A1 provided at the inlet 22 may be bleed air, which is pressurized air originating from, i.e., being "bled" from, an engine or auxiliary power unit of the aircraft. It shall be understood that one or more of the temperature, humidity, and pressure of the bleed air can vary based upon the compressor stage and revolutions per minute of the engine or auxiliary power unit from which the air is drawn. However, it should be understood that any suitable medium A1 is within the scope of the disclosure. For example, another suitable medium is outside air, also referred to herein as RAM air. Outside air can be procured via one or more scooping mechanisms, such as an impact scoop, a flush scoop, or an inlet of the engine for example. In such embodiments, when the cooling system 20 is implemented on an aircraft, the medium A1 in the form of outside air is generally pressurized relative to the vehicle's Mach number.

In the illustrated, non-limiting embodiment, the cooling system 20 includes a thermodynamic device 24 arranged downstream from the inlet 22. It should be appreciated that in an embodiment, the thermodynamic device 24 is separate from an engine, such as a gas turbine engine for example, or an auxiliary power unit of the vehicle. The thermodynamic device 24 is a mechanical device that includes components for performing thermodynamic work on a medium (e.g., extracts work from or applies work to the first medium A1 by raising and/or lowering pressure and by raising and/or lowering temperature). Examples of a thermodynamic device 24 include but are not limited to an air cycle machine, a two-wheel air cycle machine, a three-wheel air cycle machine, a four-wheel air cycle machine, etc.

In the illustrated, non-limiting embodiment, the thermodynamic device 24 includes at least one turbine mounted to a shaft 26. A turbine is a mechanical device that expands a medium and extracts work therefrom (also referred to as extracting energy). In the illustrated, non-limiting embodiment, the thermodynamic device 24 includes a plurality of turbines, such as a first turbine 28 and a second or another turbine 30 for example. As will be described in more detail later, in some embodiments, the outlet of the first turbine 28 may be fluidly connected to the inlet of the second turbine 30 such that the plurality turbines 28, 30 are arranged in series relative to the flow of medium A1. However, it should be understood that embodiments including a single turbine, or alternatively, more than two turbines are also within the scope of the disclosure.

In some embodiments, the thermodynamic device 24 additionally includes at least one compressor 32 mounted to the shaft 26. Although a single compressor is illustrated, it should be appreciated that embodiments where the thermodynamic device 24 includes more than one compressor are also contemplated herein. A compressor, such as compressor 32, is a mechanical device configured to raise a pressure of a medium and can be driven by another mechanical device (e.g., a motor or a medium via a turbine). Examples of compressor types include centrifugal, diagonal or mixed-flow, axial-flow, reciprocating, ionic liquid piston, rotary screw, rotary vane, scroll, diaphragm, air bubble, etc.

The thermodynamic device 24 may additionally include an electric generator 34. Accordingly, in some embodiments, the thermodynamic device 24 may be considered to be or to include a turbogenerator. In the non-limiting embodiment, the second turbine 30 is illustrated as being positioned directly adjacent to the generator 34 about the shaft 26. However, it should be appreciated that either the first turbine 28 or the second turbine 30, or both the first and second turbines 28, 30 may be operably coupled to the generator 34. Further, although the first turbine 28, the second turbine 30, and the electric generator 34 are illustrated as being connected directly to the same shaft 26, it should be understood that embodiments where the generator 34 is indirectly connected to either turbine 28, 30 such as where the generator 34 includes a separate shaft connected to the shaft 26 via a coupler for example, are also within the scope of the disclosure.

It should be appreciated that the electric generator 34 and the at least one compressor 32 of the thermodynamic device 24 when included, is intended to balance with the energy extracted from the medium A1 within the one or more turbines of the thermodynamic device 24. For example, the one or more turbines of the thermodynamic device 24, in combination, may be operable to extract a first energy from the first medium. Similarly, the compressor may be operable to use or absorb a second energy and the electric generator may be operable to use or absorb a third energy. The combination of the second energy and the third energy may be generally equal to the first energy.

In the non-limiting embodiment illustrated in FIG. 1, non-limiting embodiment, a heat exchanger 36 is arranged downstream, such as directly downstream for example, from an outlet of the second turbine 30. A second medium A2 is arranged in a heat transfer relationship with the first medium A1 output from the second turbine 30 within the heat exchanger 36. In the non-limiting embodiment, the second medium A2 is illustrated as fuel of the vehicle. However, it should be understood that any suitable medium that can be used as a heat sink to absorb heat from the medium A1 output from the second turbine 30 is within the scope of the disclosure.

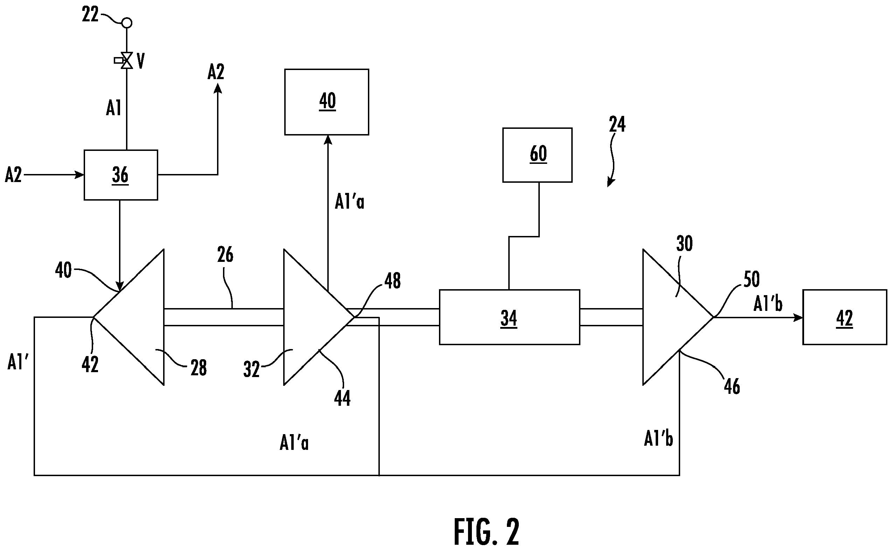

In other embodiments, such as illustrated in FIG. 2, the heat exchanger 36 may be arranged upstream from the inlet of the first turbine 28. Similarly, a second medium A2 is arranged in a heat transfer relationship with the first medium A1 at the heat exchanger 36. By positioning the heat exchanger 36 upstream from the turbine 28, the hot medium A1 is at least partially cooled prior to entering the thermodynamic device 24. As a result, the energy extracted from the medium A1 within the at least one turbine of the thermodynamic device 24 may be reduced.

It should be understood that the elements of the cooling system 20 are connected via valves, tubes, pipes, and the like. Valves (e.g., flow regulation device or mass flow valve) are devices that regulate, direct, and/or control a flow of a medium by opening, closing, or partially obstructing various passageways within the tubes, pipes, etc. of the system. Valves can be operated by actuators, such that flow rates of the medium A1 in any portion of the cooling system 20 can be regulated to a desired value.

With reference to FIG. 1, in operation, a flow of first medium A1 is provided to the inlet 22. The inlet 22 is fluidly coupled to an inlet 40 of the first turbine 28 and a valve V may be used to control the flow of the first medium A1 provided from the inlet 22 to the first turbine 28. Within the first turbine 28, the first medium A1 is expanded and energy is extracted therefrom. The energy or work extracted by the first turbine 28 may be used to drive the compressor 32 via the shaft 26 and/or may be converted into electrical energy via the generator 34. An expanded first medium A1' is provided at the outlet 42 of the first turbine 28.

The outlet 42 of the first turbine 28 is fluidly coupled to an inlet 44 of the compressor 32 and to an inlet 46 of the second turbine 30. In an embodiment, the compressor 32 and the second turbine 30 are arranged in parallel relative to the outlet 42 of the first turbine 28. Accordingly, all, or at least a first portion A1'a of the expanded first medium A1' may be provided to the compressor 32 and/or all or at least a second portion A1'b of the expanded first medium A1' may be provided to the second turbine 30. Although not shown, one or more valves may be disposed between the outlet 42 of the first turbine 28 and the inlet 44, 46 of at least one of the compressor 32 and the second turbine 30 to control the flow of the expanded first medium A1' provided to each of the compressor 32 and the second turbine 30.

The act of compressing the first portion A1'a of the expanded first medium A1' heats and increases the pressure of the first portion A1'a of the expanded first medium A1'. Accordingly, the temperature and pressure of the first portion A1'a of the expanded first medium A1' output from an outlet 48 of the compressor 32 is greater than the temperature and pressure of the first portion A1'a of the expanded first medium A1'provided to the inlet 44 of the compressor 32. From the compressor 32, the first portion A1'a of the expanded first medium A1' may be delivered to at least one downstream component or system, illustrated schematically at 40, or alternatively, may be exhausted overboard. In the illustrated, non-limiting embodiment, the downstream component may be a component of an environmental control system. However, embodiments where the first portion A1'a of the expanded first medium A1' output from the compressor 32 is provided to another component or system of the aircraft are also contemplated herein.

Within the second turbine 30, the second portion A1'b of the expanded first medium A1' is further expanded and energy is extracted therefrom. The energy or work extracted within the second turbine 30 may be used to drive the compressor 32 via the shaft and/or may be converted into electrical energy via the generator 34. The energy created at the generator 34 may be stored, sent to at least one electrical load of the vehicle, illustrated schematically at 60. In some embodiments, electrical energy from the generator 34 is sent to an aircraft bus, where it may then be supplied to one or more electrical loads of the vehicle.

The second portion A1'b of the expanded first medium A1' output from the outlet 50 of the second turbine 30 is then provided to the heat exchanger 36. As shown, the heat exchanger 36 may be located directly downstream from the outlet of the second turbine 30. Within the heat exchanger 36, the second medium A2 acts as a heat sink to absorb additional heat from the second portion A1'b of the expanded first medium A1'. From the heat exchanger 36, the second portion A1'b of the expanded first medium A1' may be dumped overboard or may be delivered to at least one downstream component or system, illustrated schematically at 42. In an embodiment, at least part of the second portion A1'b of the expanded first medium A1' is used to cool a portion of the airframe of the vehicle.

It should be appreciated that in embodiments where the second medium A2 is fuel, the heat exchanger 36 may be arranged at any suitable location within a fuel circuit. Further, in some embodiments, oxygen is extracted from second medium A2, such as at a location upstream from the heat exchanger 36 for example, to prevent oxidation of the fuel that can occur at high temperatures.

In the non-limiting embodiment of FIG. 2, the overall operation of the cooling system 20 is generally identical to the system of FIG. 1. However, in the cooling system shown in FIG. 2, the first medium A1 provided at the inlet 22 may be supplied directly to the heat exchanger 36. Within the heat exchanger 36, the second medium A2 acts as a heat sink to absorb additional heat from the first medium A1'. The resulting cooling first medium is then configured provided to the thermodynamic device 24 as previously described. The cooler, lower pressure expanded first medium A1'b provided at the outlet 50 of the second turbine 30, may similarly be provided to one or more systems of the vehicle, such as to cool the airframe for example, or may be exhausted overboard.

As illustrated and described herein, the cooling system 20 cools a first medium A1 while using only a second medium F, such as fuel for example, as a heat sink. Further, the cooling system 20 may provide a conditioned medium A1 in the form of A1'a or A1'b to various aircraft system, such as at 40 or 42, and electrical power as well via the generator 34. Such a cooling system 20 capable of drastically reducing the temperature of the first medium A1 provided thereto is particularly relevant in supersonic and hypersonic applications where the temperature of the first medium A1 at the inlet 22 exceeds the cooling capability of existing systems.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A cooling system for an aircraft capable of travelling at hypersonic speeds, the cooling system comprising:
an inlet (22) configured to receive a first medium;
a thermodynamic device (24) fluidly connected to the inlet (22), the thermodynamic device (24) including at least one turbine and a compressor operably coupled via a shaft, wherein an outlet of the at least one turbine is directly fluidly connected to an inlet of the compressor; and
an electric generator (34) operably coupled to the at least one turbine.

2. The cooling system of claim 1, further comprising a heat exchanger (36), the heat exchanger (36) being arranged upstream from the at least one turbine relative to a flow of the first medium.

3. The cooling system of claim 1, further comprising a heat exchanger (36), the heat exchanger (36) being arranged upstream from the thermodynamic device (24) relative to a flow of the first medium.

4. The cooling system of claim 1, wherein the at least one turbine further comprises a first turbine (28) and a second turbine (30), the first turbine (28) and the second turbine (30) being arranged in series relative to a flow of medium.

5. The cooling system of claim 4, wherein an inlet of the second turbine (30) is directly fluidly connected to the outlet of the first turbine (28).

6. The cooling system of claim 4 or 5, wherein the outlet of the first turbine (28) is directly fluidly connected to the inlet of the compressor, and optionally wherein the compressor and the second turbine (30) are arranged in parallel relative to the outlet of the first turbine (28).

7. The cooling system of claim 4, further comprising a heat exchanger (36), the heat exchanger (36) being arranged downstream from the at least one turbine relative to a flow of the first medium, and optionally wherein the heat exchanger (36) is arranged directly downstream from an outlet of the second turbine (30), and optionally wherein a second medium is arranged in a heat transfer relationship with the first medium within the heat exchanger (36) and the second medium is fuel.

8. The cooling system of any preceding claim, wherein the electric generator (34) is operably coupled to at least one electrical load of the aircraft.

9. The cooling system of any preceding claim, wherein the at least one turbine is operable to extract a first energy from the first medium, the compressor is operable to use a second energy, and the electric generator (34) is operable to use a third energy, the first energy being generally equal to the second energy and the third energy when combined.

10. The cooling system of any preceding claim, wherein the first medium at the inlet (22) has a temperature of at least on 537.78 degrees Celsius (1000°F).

11. The cooling system of any preceding claim, wherein the first medium is bleed air.

12. The cooling system of any of claims 1-10, wherein the first medium is fresh air

13. A method of cooling a medium comprising:
providing a first medium having a temperature of at least 537.78 degrees Celsius (1000°F);
extracting energy from the first medium a turbine to form an expanded first medium;
compressing at least a portion of the expanded first medium via a compressor, the compressor being driven by energy extracted from the first medium within the turbine; and
generating energy via an electric generator (34), the electric generator (34) also being driven by energy extracted from the first medium within the turbine.

14. The method of claim 13, further comprising cooling the first medium prior to extracting energy from the first medium within the turbine; and/or
cooling the first medium after the extracting energy from the first medium within the turbine.

15. The method of claim 13 or 14, further comprising extracting energy from another portion of the expanded first medium within another turbine, wherein the energy extracted from the expanded first medium within the another turbine is used to drive the compressor and the electric generator (34), and optionally further comprising cooling the first medium after the extracting energy from the expanded first medium within the another turbine.
